# EUROPÄISCHE PATENTSCHRIFT

(11) **EP 3 156 305 B1**
(45) Veröffentlichungstag und Bekanntmachung des Hinweises auf die Patenterteilung: **27.03.2019**
(21) Anmeldenummer: 16193711.5
(22) Anmeldetag: 13.10.2016
(51) Int. Cl.: B62D 1/14, B66F 9/075

(54) **FLURFÖRDERZEUG MIT EINER MECHANISCH GEKOPPELTEN LENKUNG**
INDUSTRIAL TRUCK WITH MECHANICALLY COUPLED STEERING
CHARIOT DE MANUTENTION À DIRECTION MÉCANIQUEMENT COUPLÉE

(30) Priorität: 16.10.2015 DE 102015117618
(43) Veröffentlichungstag der Anmeldung: 19.04.2017
(73) Patentinhaber: Jungheinrich Aktiengesellschaft, 22047 Hamburg (DE)
(72) Erfinder: Mittag, Stefan, 04178 Leipzig (DE); Kral, Marko, 06114 Halle/Saale (DE)
(74) Vertreter: Hauck Patentanwaltspartnerschaft mbB

(56) Entgegenhaltungen:
- EP-A1- 2 036 851
- EP-A2- 1 808 402
- EP-A2- 2 284 117
- US-A- 3 068 019

## Beschreibung

Die vorliegende Erfindung betrifft ein Flurförderzeug mit einem Antriebsteil und einem Lastteil, das ein höhenverstellbares Lasttragmittel aufweist. Das Antriebsteil ist mit mindestens einem angetriebenen Rad ausgestattet, das über eine Deichsel in seiner Richtung einstellbar ist. Es ist eine mechanisch gekoppelte Lenkung vorgesehen, bei der die Deichsel um eine erste vertikale Lenkachse und das mindestens eine angetriebene Rad um eine zweite vertikale Lenkachse an dem Antriebsteil drehbar gelagert ist. Die Deichsel ist mit einer ersten um die erste Lenkachse drehenden Lenkwelle gekoppelt, während das angetriebene Rad mit einer zweiten um die zweite Lenkachse drehenden zweiten Lenkwelle gekoppelt ist. Bevorzugt besitzen derartige Flurförderzeuge ein dreirädriges Fahrwerk mit einem angetriebenen und deichselgelenktem Rad.

Im Gegensatz zu einer elektrischen Lenkung ist bei der mechanischen Lenkung die Drehachse der Deichsel vorgegeben. Sie liegt auf der Verbindungsachse zum gelenkten Rad, so dass dieses sich um die senkrechte Drehachse der Deichsel dreht. Unter dem Gesichtspunkt der Fahrzeugergonomie ist die vorgegebene Drehachse der Deichsel nachteilig. Insbesondere bei Fahrzeugen, die einen Mitfahrbetrieb erlauben, kann der Schwenkbereich der Deichsel, je nach Standort des Fahrers, stark variieren. Durch die Festlegung auf die Drehachse des angetriebenen Rades ist die Anordnung der Deichsel aus ergonomischer Sicht eingeschränkt.

Aus EP 1 808 402 A2 ist ein Niederhubwagen mit einem Lastteil gemäß dem Oberbegriff des Anspruchs 1 bekannt, das ein Lasttragmittel aufweist und über eine Hydraulikzylinderanordnung und ein Gestänge für Lasträder des Lasttragmittels mit einem Antriebsteil gekoppelt ist. Der Niederhubwagen besitzt ein gelenktes Antriebsrad, das mit einem Antriebsmotor eine Antriebseinheit bildet, die um eine vertikale Achse drehbar gelagert ist. An dem Antriebsteil ist ferner eine um eine horizontale und um eine vertikale Achse schwenkbare Deichsel vorgesehen, die mit der Antriebseinheit in Triebverbindung steht. Dabei fallen die vertikalen Achsen des gelenkten Antriebsrades und der schwenkbaren Deichsel auseinander.

Aus US 3,068,019 ist ein Niederhubwagen bekannt, der ein Paar von gelenkten und angetriebenen Rädern besitzt. Mittig zwischen diesen Rädern ist eine um eine vertikale Achse schwenkbare Deichsel angeordnet, die beide gelenkten Räder über einen Riemenmechanismus stellt.

Der Erfindung liegt die Aufgabe zugrunde, ein deichselgeführtes Flurförderzeug bereitzustellen, das auch bei mechanischer Lenkung eine ergonomische Positionierung der Deichseldrehachse gestattet.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug besitzt ein Antriebsteil und ein Lastteil. Das Lastteil weist ein höhenverstellbares Lasttragmittel auf. Das Antriebsteil ist mit mindestens einem angetriebenen Rad lenkbar, das über eine Deichsel für eine Lenkbewegung in seiner Richtung einstellbar ist. Die Kopplung zwischen Deichsel und angetriebenem Rad erfolgt mechanisch, wobei die Deichsel mit einer ersten vertikalen Lenkwelle gekoppelt und drehbar an dem Antriebsteil gelagert ist. Das angetriebene Rad ist mit einer zweiten vertikalen Lenkwelle gekoppelt und an dem Antriebsteil drehbar gelagert. Erfindungsgemäß ist eine Getriebeeinheit vorgesehen, über die erste und zweite Lenkwelle miteinander gekoppelt sind, um eine Drehbewegung von einer der Lenkwellen auf die andere Lenkwelle zu übertragen. Durch die Verwendung einer zwischen der ersten und der zweiten Lenkwelle wirkenden Getriebeeinheit ist es möglich, die Deichsel mit ihrer ersten vertikalen Lenkwelle an ergonomisch vorgegebenen Punkten des Antriebsteils zu platzieren. Die Drehbewegung der Deichsel wird dann über die Getriebeeinheit auf die Lenkwelle des Rades übertragen. Erfindungsgemäß sind erste und zweite Lenkwelle räumlich voneinander beabstandet angeordnet. Hierdurch kann eine ergonomisch günstige Positionierung der Deichsel erfolgen. Bevorzugt ist die erste Lenkwelle entlang einer Fahrzeuglängslinie auf der dem Lastteil zugewandten Seite zu der zweiten vertikalen Achse angeordnet. Hierdurch rückt die Deichsel weiter von einer möglicherweise vorgesehenen Mitfahrplattform fort und kann so ergonomisch auch für einen Mitfahrer günstig platziert sein.

Erfindungsgemäß besitzt die Getriebeeinheit zwei beispielsweise über einen Zahnriemen oder einen Flachriemen miteinander gekoppelte Riemenscheiben.

Grundsätzlich sind auch andere Formen von Getriebeeinheiten denkbar; die Verwendung von Flach- oder Zahnriemen und Riemenscheiben erlaubt einen einfachen und wartungsfreien Aufbau der Getriebeeinheit. Erfindungsgemäß ist das mindestens eine angetriebene Rad in vertikaler Richtung federnd gelagert und mindestens eine der Riemenscheiben ist in der Höhe verstellbar auf ihrer Lenkwelle angeordnet.

Um ein Übersetzungsverhältnis zwischen einer Bewegung der Deichsel und einer Bewegung des gelenkten Rades zu erzielen, weisen die Riemenscheiben unterschiedliche Durchmesser auf.

In einer besonders bevorzugten Ausgestaltung ist das mindestens eine angetriebene Rad drehbar um eine Drehachse an dem Antriebsteil gelagert. Das angetriebene Rad weist einen in der Drehachse angeordneten Motor auf, über den das angetriebene Rad zu einer Vor- oder Rückwärtsfahrt angetrieben wird. Ferner ist eine den Motor umgreifende Verbindungseinrichtung vorgesehen. Die Verbindungseinrichtung erstreckt sich ganz oder teilweise entlang dem Umfang des Motors. Die Verbindungseinrichtung weist ebenfalls einen oberhalb des Motors angeordneten Verbindungsabschnitt auf, der von der Drehachse des Motors durchstoßen wird. In dem Durchstoßpunkt liegt in der Drehachse die zweite Lenkwelle angeordnet.

In einer bevorzugten Weiterbildung der Erfindung ist der Riemen als ein Zahnriemen ausgebildet. Der Zahnriemen kämmt mit seinen Zähnen in einer Zahnscheibe, die eine korrespondierende Zahnung aufweist. Alternativ zu dem Zahnriemen kann auch ein Flachriemen vorgesehen sein. Bei der Verwendung eines Flachriemens ist es grundsätzlich möglich, das Drehmoment durch die Haftreibung zwischen Flachriemen und Riemenscheibe zu übertragen. Auch ist es möglich,
mindestens eine der Riemenscheiben auf ihre Umfangsfläche eine sich in Längsrichtung erstreckende Klemmvertiefung vorzusehen. Zusätzlich zu der Klemmvertiefung kann ein in der Klemmvertiefung befestigbarer Klemmstein vorgesehen sein, wobei dann der Flachriemen zwischen Klemmstein und Klemmvertiefung geführt ist. Durch die Befestigung des Klemmsteins wird der Flachriemen dann in seiner Position auf der Riemenscheibe gehalten. Bevorzugt ist der Klemmstein über ein schraubbares Befestigungsmittel, wie beispielsweise eine Schraube, einen Bolzen oder dergleichen in der Klemmvertiefung befestigt. Der Flachriemen besitzt ebenfalls mindestens eine Aussparung für das mindestens eine schraubbare Befestigungsmittel. Im zusammengebauten Zustand ist der Klemmstein über Schrauben, die sich durch die Aussparung in dem Flachriemen erstrecken, in der Klemmvertiefung verschraubt und dort gehalten. Bevorzugt erfolgt diese Befestigung des Flachriemens an beiden Riemenscheiben.

In einer weiter bevorzugten Ausgestaltung besitzen beide Riemenscheiben auf ihrer Umfangsfläche eine sich in Längsrichtung erstreckende Arretiernut und einen separat ausgebildeten Sperrhebel, der, in beiden Arretiernuten angeordnet, ein Verdrehen der Riemenscheiben gegeneinander sperrt. Der Sperrhebel kann von oben eingesetzt und entfernt werden und verhindert so eine Betätigung der Lenkung.

Ein bevorzugtes Ausführungsbeispiel wird nachfolgend anhand der Figuren näher erläutert. Es zeigen:
- Fig. 1: ein erfindungsgemäßes Flurförderzeug in der Ansicht von der Seite,
- Fig. 2: eine Ansicht auf die Getriebeanordnung,
- Fig. 3: eine perspektivische Ansicht auf die Zahnscheiben mit Zahnriemen,
- Fig. 4a, b: Detailansicht bei Verwendung eines Flachriemens, und
- Fig. 5: Ansicht einer Riemenscheibe mit Klemmstein.

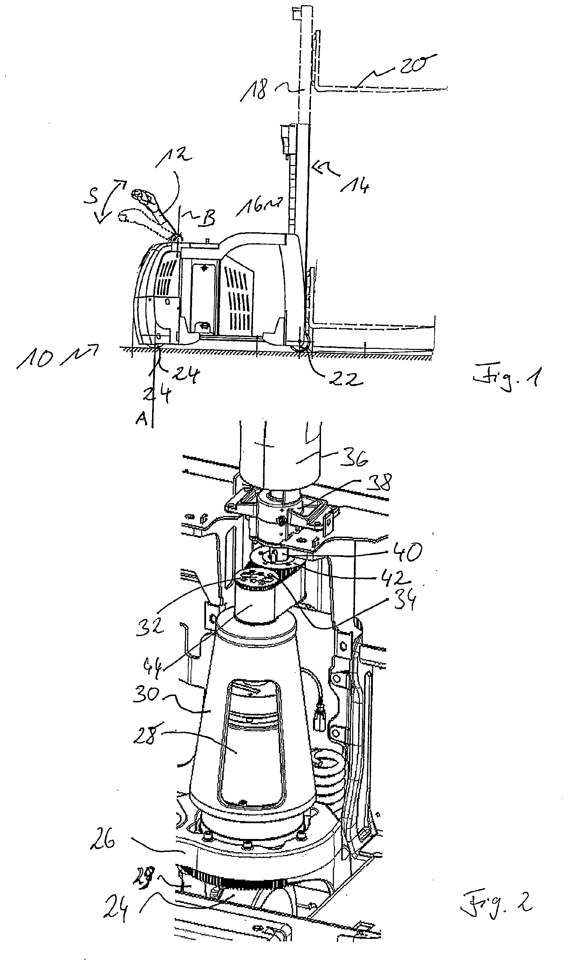

Fig. 1 zeigt ein erfindungsgemäßes Flurförderzeug in der Ansicht von der Seite. Das Antriebsteil 10 ist mit einer Deichsel 12 ausgestattet. Das Lastteil 14 besitzt ein Hubgerüst 16 mit einem ausfahrbaren Hubmast 18 und Lastgabeln 20 als Lasttragmittel. Das Antriebsteil 10 besitzt ein dreirädriges Fahrwerk mit zwei an der Seite zum Lastteil angeordneten Lasträdern 22. Gelenkt und angetrieben wird das Antriebsteil über das mittig angeordnete Antriebsrad 24. Das Antriebsrad 24 ist um eine Achse A drehbar in dem Antriebsteil 10 gelagert.

Die Deichsel 12 ist entlang dem Doppelpfeil S um eine horizontal verlaufende Achse schwenkbar und um eine vertikal verlaufende Achse B drehbar auf einer Oberseite des Antriebsteils 10 gelagert. Deutlich zu erkennen in Fig. 1 ist, dass die vertikalen Drehachsen A und B räumlich voneinander getrennt sind und nicht zusammenfallen. Die Drehachse B ist relativ zu der Drehachse A des Antriebsrades 24 näher zum Lastteil angeordnet.

Fig. 2 zeigt den Aufbau im Inneren des Antriebsteils 10. Das Antriebsrad 24 ist unterhalb des Lagerringes 26 angeordnet. Der Lagerring 26 ist fest mit dem Fahrzeugrahmen verbunden. Durch den Lagerring 26 hindurch steht der Antriebsmotor 28 hoch, der über ein unterhalb des Lagerringes 26 angeordnetes Getriebe 29 das Antriebsrad 24 antreibt. Eine Verbindungseinrichtung 30 überträgt eine Drehbewegung auf das gelenkte Antriebsrad 24. Hierfür sind verschiedene Ausgestaltungen grundsätzlich denkbar, je nach drehbarer Lagerung der Getriebeeinheit 29 an dem Lagerring 26. Da über die Verbindungseinrichtung 30 eine Drehbewegung auf das gelenkte Antriebsrad 24 übertragen wird, wird die Verbindungseinrichtung 30 beispielsweise am Gehäuse des Getriebes 29 angreifen, sofern dieses drehbar gelagert ist. Alternativ kann die Verbindungseinrichtung 30 auch an dem Motor 28 angreifen, wenn dieser drehbar gelagert ist.

Die Verbindungseinrichtung 30 trägt eine Zahnscheibe 34. Der Fuß 36 der Deichsel ist am Gehäuse des Antriebsteils drehbar in einem Lager 38 angeordnet und erstreckt sich in eine erste Lenkwelle 40. Auf der ersten Lenkwelle 40 sitzt eine zweite Zahnscheibe 42, deren Durchmesser größer als der der Zahnscheibe 34 ist. Zahnscheiben 34 und 42 sind über einen Zahnriemen 44 miteinander gekoppelt.

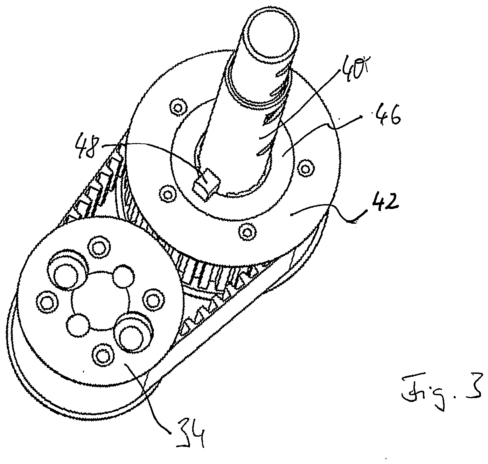

Fig. 3 zeigt eine Detailansicht zu den Zahnscheiben. Zahnscheibe 42 sitzt auf einem Lager 46, das auf der Lenkwelle 40 sitzt. Das Lager 46 ist verdrehsicher auf der Lenkwelle 40 über eine Passfeder 48 angeordnet. Das Lager 46 ist gleitend auf der Lenkwelle 40 angeordnet und kann sich entlang dieser verschieben. Der Antrieb kann ein- und ausfedern, so dass auch die Zahnscheibe 34 sich in vertikaler Richtung bewegt. Die Zahnscheibe 40 ist entlang der Lenkwelle verschieblich angeordnet und kann Fahrwerksbewegungen in vertikaler Richtung ausgleichen. Das Verhältnis von Zahnscheibe 34 zu Zahnscheibe 42 bestimmt die Umsetzung der Deichselbewegung in die Lenkbewegung.

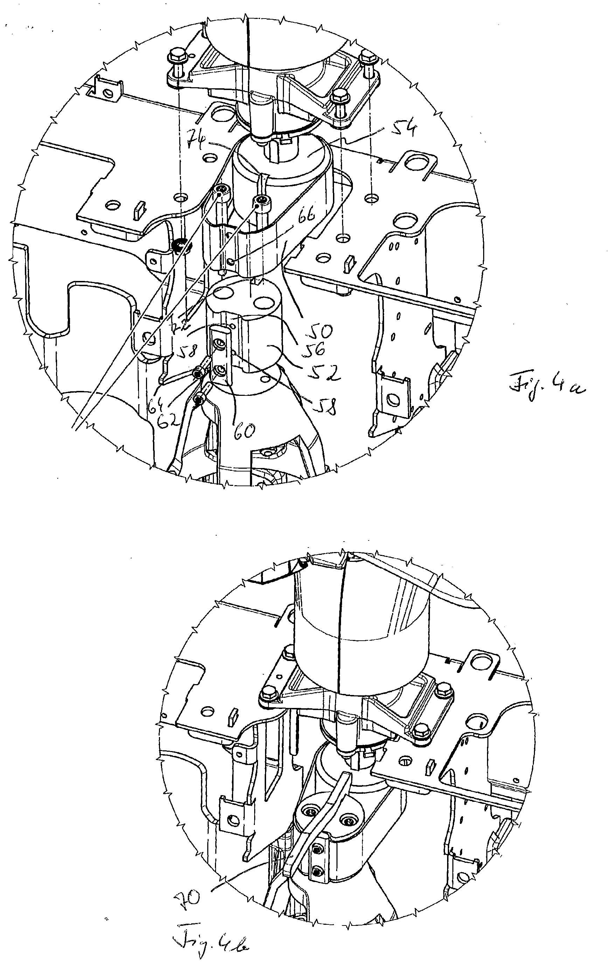

Fig. 4a zeigt in einer auseinandergezogenen Darstellung die Verwendung eines Flachriemens 50 mit einer Riemenscheibe 52, die mit dem angetriebenen Rad gekoppelt ist und mit einer Riemenscheibe 54, die mit einer Lenkwelle der Deichsel gekoppelt ist. Die Riemenscheibe 52 besitzt eine sich in Längsrichtung erstreckende Klemmvertiefung 56, die an ihrem Grund zwei Bohrungen 58 besitzt. In der Explosionsdarstellung aus Fig. 4a ebenfalls dargestellt ist ein Klemmstein 60, der zwei Bohrungen 62 besitzt. Über ein Schraubenpaar 64 kann der Klemmstein 60 in der Klemmvertiefung 56 angeordnet und festgelegt werden. Der Flachriemen 50 besitzt ebenfalls ein Paar Bohrungen 66, durch die die Schrauben 64 geführt werden können.

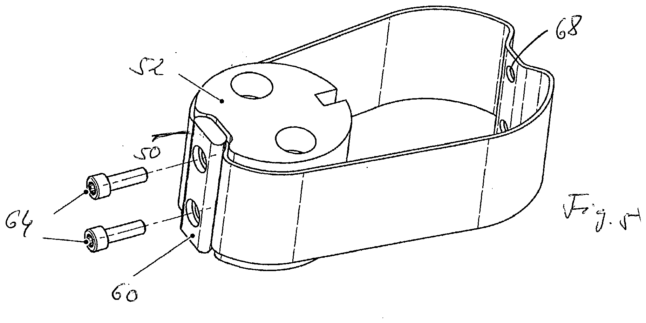

Die Riemenscheibe 54 besitzt ebenfalls eine Klemmvertiefung, in der ein Klemmstein über Schrauben festgelegt wird. Der Flachriemen 50 besitzt hierfür entsprechende Bohrungen 68 (vgl. Fig. 5). Wie in Fig. 4a und 5 zu erkennen ist, besitzen die Riemenscheiben 52 und 54 jeweils eine Arretiernut 72, 74. Jede der Arretiernuten 72, 74 ist diametral gegenüberliegend der Klemmvertiefung angeordnet.

Die Arretiernuten können einen Sperrhebel 70 aufnehmen. Der Sperrhebel 70 wird, wie in Fig. 4b dargestellt, in beiden Arretiernuten angeordnet und sperrt so das Übertragen einer Drehbewegung zwischen den beiden Riemenscheiben.

### Bezugszeichenliste

- 10: Antrieb steil
- 12: Deichsel
- 14: Lastteil
- 16: Hubgerüst
- 18: Hubmast
- 20: Lastgabeln
- 22: Lasträder
- 24: Antriebsrad
- 26: Lagerring
- 28: Antriebsmotor
- 29: Getriebe
- 30: Verbindungseinrichtung
- 32: Ansatz der Verbindungseinrichtung
- 34: Zahnscheibe
- 36: Fuß
- 38: Lager
- 40: Lenkwelle
- 42: Riemenscheibe
- 44: Riemen
- 46: Lager
- 48: Passfeder
- 50: Flachriemen
- 52: Riemenscheibe
- 54: Riemenscheibe
- 56: Klemmvertiefung
- 58: Bohrungen
- 60: Klemmstein
- 62: Bohrungen
- 64: Schrauben
- 66: Bohrungen
- 68: Bohrungen
- 70: Sperrhebel
- 72: Arretiernut
- 74: Arretiernut

## Patentansprüche

1. Flurförderzeug mit einem Antriebsteil (10) und einem Lastteil (14), das ein höhenverstellbares Lasttragmittel (20) aufweist, wobei das Antriebsteil (10) mit mindestens einem angetriebenen Rad (24) ausgestattet ist, das über eine Deichsel (12) in seiner Richtung einstellbar ist, wobei eine mechanisch gekoppelte Lenkung vorgesehen ist, bei der die Deichsel (12) mit einer ersten vertikalen Lenkwelle (40) und das mindestens eine angetriebene Rad (24) mit einer zweiten vertikalen Lenkwelle (32) gekoppelt sind, wobei die
erste und zweite Lenkwelle (32, 40) räumlich beabstandet voneinander angeordnet und über eine Getriebeeinheit (42, 34, 44) miteinander gekoppelt sind, um eine Drehbewegung von einer der Lenkwellen auf die andere Lenkwelle zu übertragen,
**dadurch gekennzeichnet, dass**
die Getriebeeinheit zwei über einen Riemen (44) miteinander gekoppelte Riemenscheiben (52, 54) aufweist und das mindestens eine angetriebene Rad (24) in vertikaler Richtung federnd gelagert ist, wobei mindestens eine der Riemenscheiben in der Höhe verstellbar auf ihrer Lenkwelle angeordnet ist

2. Flurförderzeug nach Anspruch 1, **dadurch gekennzeichnet, dass** die erste Lenkwelle entlang einer Fahrzeuglängslinie auf der dem Lastteil (14) zugewandten Seite zu der zweiten vertikalen Achse (32) angeordnet ist.

3. Flurförderzeug nach Anspruch 1, **dadurch gekennzeichnet, dass** die Riemenscheiben (52, 54) unterschiedliche Durchmesser zueinander aufweisen.

4. Flurförderzeug nach einem der Ansprüche 1 bis 3, **dadurch gekennzeichnet, dass** mindestens ein angetriebenes Rad drehbar um eine Drehachse gelagert ist und einen Motor sowie eine den Motor umgreifende Verbindungseinrichtung aufweist, auf der in der Drehachse die zweite Lenkwelle (32) angeordnet ist.

5. Flurförderzeug nach Anspruch 1, **dadurch gekennzeichnet, dass** der Riemen (44) als ein Zahnriemen ausgebildet ist.

6. Flurförderzeug nach Anspruch 1, **dadurch gekennzeichnet, dass** der Riemen als ein Flachriemen (50) ausgebildet ist.

7. Flurförderzeug nach Anspruch 6, **dadurch gekennzeichnet, dass** mindestens eine der Riemenscheiben auf ihrer Umfangsfläche eine sich in Längsrichtung erstreckende Klemmvertiefung (56) und einen in der Klemmvertiefung (56) befestigbaren Klemmstein (60) besitzt, wobei der Flachriemen (50) zwischen Klemmstein (60) und Klemmvertiefung (56) geführt ist.

8. Flurförderzeug nach Anspruch 7, **dadurch gekennzeichnet, dass** der Klemmstein (60) über mindestens ein schraubbares Befestigungsmittel (64) in der Klemmvertiefung (56) befestigbar ist.

9. Flurförderzeug nach Anspruch 8, **dadurch gekennzeichnet, dass** der Flachriemen (50) mindestens eine Bohrung (68) für das mindestens eine schraubbare Befestigungsmittel (64) aufweist.

10. Flurförderzeug nach einem der Ansprüche 1 bis 9, **dadurch gekennzeichnet, dass** beide Riemenscheiben (52, 54) mit ihrer Umfangsfläche eine sich in Längsrichtung erstreckende Arretiernut (72, 74) besitzen und ein separat ausgebildeter Sperrhebel (70) vorgesehen ist, der in beiden Arretiernuten (72, 74) angeordnet, ein Verdrehen der Riemenscheiben (52, 54) gegeneinander sperrt.

## Claims

1. An industrial truck comprising a drive portion (10) and a load portion (14) that comprises a height-adjustable load-bearing means (20), the drive portion (10) being equipped with at least one driven wheel (24) that can be adjusted in terms of its direction via a control handle (12), mechanically coupled steering being provided in which the control handle (12) is coupled to a first vertical steering shaft (40) and the at least one driven wheel (24) is coupled to a second vertical steering shaft (32),
the first and second steering shaft (32, 40) being arranged so as to be spaced apart from one another and being coupled to one another via a transmission unit (42, 34, 44) so as to transmit a rotary movement from one of the steering shafts to the other steering shaft,
**characterized in that**
the transmission unit comprises two belt pulleys (52, 54) that are coupled to one another via a belt (44) and the at least one driven wheel (24) is mounted vertically in a resilient manner, at least one of the belt pulleys being arranged on the steering shaft thereof so as to be adjustable in height.

2. The industrial truck according to claim 1, **characterized in that** the first steering shaft is arranged along a vehicle longitudinal line on the side facing the load portion (14) relative to the second vertical axis (32).

3. The industrial truck according to claim 1, **characterized in that** the belt pulleys (52, 54) have different diameters.

4. The industrial truck according to any of claims 1 to 3, **characterized in that** at least one driven wheel is mounted so as to be rotatable about an axis of rotation and comprises a motor and a connection means which surrounds the motor and on which the second steering shaft (32) is arranged within the axis of rotation.

5. The industrial truck according to claim 1, **characterized in that** the belt (44) is designed as a toothed belt.

6. The industrial truck according to claim 1, **characterized in that** the belt is designed as a flat belt (50).

7. The industrial truck according to claim 6, **characterized in that** at least one of the belt pulleys has a clamping recess (56) that extends in a longitudinal direction on the peripheral surface thereof and a clamping block (60) that can be secured in the clamping recess (56), the flat belt (50) being guided between the clamping block (60) and the clamping recess (56).

8. The industrial truck according to claim 7, **characterized in that** the clamping block (60) can be secured in the clamping recess (56) by means of at least one screwable securing means (64).

9. The industrial truck according to claim 8, **characterized in that** the flat belt (50) comprises at least one hole (68) for the at least one screwable securing means (64).

10. The industrial truck according to any of claims 1 to 9, **characterized in that** both pulleys (52, 54) have a detent groove (72, 74) that extends in a longitudinal direction on the peripheral surface of each belt pulley and a separately formed locking lever (70) is provided, which, when positioned in both detent grooves (72, 74), stops the belt pulleys (52, 54) from rotating relative to one another.

## Revendications

1. Chariot de manutention constitué d'une partie motrice (10) et d'une partie de charge (14), qui présente un porte-charge (20) réglable en hauteur, dans lequel la partie motrice (10) est équipée au moins d'une roue d'entraînement (24), qui est orientable dans sa direction au moyen d'un timon (12), dans lequel une direction à couplage mécanique est prévue, sur laquelle le timon (12) est couplé à un premier arbre de direction vertical (40) et au moins une roue d'entraînement (24) est couplée à un second arbre de direction vertical (32), dans lequel les premier et second arbres de direction (32, 40) sont disposés avec un écartement spatial l'un par rapport à l'autre et couplés l'un à l'autre au moyen d'une unité de transmission (42, 34, 44) pour transmettre un mouvement rotatif de l'un des arbres de direction à l'autre arbre de direction,
**caractérisé en ce que**
l'unité de transmission présente deux poulies d'entraînement (52, 54) couplées l'une à l'autre par une courroie (44) et que ladite roue d'entraînement (24) au moins est montée verticalement sur ressort, dans laquelle au moins l'une des poulies d'entraînement réglable en hauteur est disposée sur son arbre de direction.

2. Chariot de manutention selon la revendication 1, **caractérisé en ce que** le premier arbre de direction est disposé suivant une ligne longitudinale du véhicule du côté tourné vers la partie de charge (14) par rapport au second axe vertical (32).

3. Chariot de manutention selon la revendication 1, **caractérisé en ce que** les poulies d'entraînement (52, 54) présentent des diamètres différents l'un de l'autre.

4. Chariot de manutention selon l'une des revendications 1 à 3, **caractérisé en ce qu'**au moins une roue d'entraînement est montée de manière à pouvoir pivoter sur un axe de rotation et présente un moteur ainsi qu'un dispositif de raccordement enveloppant le moteur, sur lequel le second arbre de direction (32) est disposé dans l'axe de rotation.

5. Chariot de manutention selon la revendication 1, **caractérisé en ce que** la courroie (44) est conçue sous la forme d'une courroie crantée.

6. Chariot de manutention selon la revendication 1, **caractérisé en ce que** la courroie est conçue sous la forme d'une courroie plate (50).

7. Chariot de manutention selon la revendication 6, **caractérisé en ce qu'**au moins l'une des poulies d'entraînement possède une cavité de blocage (56) s'étendant dans la direction longitudinale sur sa surface circonférentielle et une cale (60) pouvant être fixée dans la cavité de blocage (56), dans lequel la courroie plate (50) est guidée entre la cale (60) et la cavité de blocage (56).

8. Chariot de manutention selon la revendication 7, **caractérisé en ce que** la cale (60) peut être fixée dans la cavité de blocage (56) à l'aide d'au moins un moyen de fixation à visser (64).

9. Chariot de manutention selon la revendication 8, **caractérisé en ce que** la courroie plate (50) présente au moins un trou taraudé (68) pour recevoir au moins ledit moyen de fixation à visser (64).

10. Chariot de manutention selon l'une des revendications 1 à 9, **caractérisé en ce que** les deux poulies d'entraînement (52, 54) possèdent avec leur surface circonférentielle une rainure d'arrêt (72, 74) s'étendant dans la direction longitudinale et qu'un levier de verrouillage (70) conçu séparément est prévu, qui empêche la rotation des poulies d'entraînement (52, 54) l'une par rapport à l'autre en étant disposé dans les deux rainures d'arrêt (72, 74).
